# EUROPÄISCHE PATENTSCHRIFT

(11) **EP 4 058 289 B1**
(45) Veröffentlichungstag und Bekanntmachung des Hinweises auf die Patenterteilung: **27.09.2023**
(21) Anmeldenummer: 21769905.7
(22) Anmeldetag: 24.08.2021
(51) Int. Cl.: B32B 38/06, B44C 1/24, B44C 5/04, E04F 15/02, E04F 15/10

(54) **VERFAHREN ZUR HERSTELLUNG EINER POLYVINYLCHLORID-FREIEN DECKSCHICHT, POLYVINYLCHLORID-FREIE DECKSCHICHT SOWIE BELAGSELEMENT**
METHOD FOR MANUFACTURING A POLYVINYL CHLORIDE-FREE COVER LAYER, POLYVINYL CHLORIDE-FREE COVER LAYER, AND SURFACING ELEMENT
PROCÉDÉ DE FABRICATION D'UNE COUCHE DE RECOUVREMENT EXEMPTE DE CHLORURE DE POLYVINYLE, COUCHE DE RECOUVREMENT EXEMPTE DE CHLORURE DE POLYVINYLE ET ÉLÉMENT DE SURFAÇAGE

(30) Priorität: 16.10.2020 DE 102020006377; 18.11.2020 DE 102020007039
(43) Veröffentlichungstag der Anmeldung: 21.09.2022
(73) Patentinhaber: Parador GmbH, 48653 Coesfeld (DE)
(72) Erfinder: NOWAK, Dirk, 72202 Nagold (DE); WELLEKÖTTER, Christoph, 48703 Stadtlohn (DE); PETERSEN, Frank, 48653 Coesfeld (DE)
(74) Vertreter: Weidener, Jörg Michael
(86) Internationale Anmeldenummer: PCT/EP2021/073350
(87) Internationale Veröffentlichungsnummer: WO 2022/078659

(56) Entgegenhaltungen:
- EP-A1- 2 883 712
- DE-A1-102011 001 807
- US-A1- 2017 254 095
- US-A1- 2018 202 170

## Beschreibung

Die Erfindung betrifft ein Verfahren zur Herstellung einer Polyvinylchlorid-freien Deckschicht für ein Belagselement, insbesondere ein Boden-, Wand- oder Deckenbelagselement. Bevorzugt ist die Deckschicht zur Anbindung, vorzugsweise zur Kaschierung, auf einer Trägerplatte des Belagselements vorgesehen.

Des Weiteren betrifft die vorliegende Erfindung eine Polyvinylchlorid-freie Deckschicht, insbesondere vorgesehen zur Verbindung, bevorzugt zur Kaschierung, mit einer Trägerplatte eines Belagselements sowie ein Belagselement mit einer Deckschicht der vorgenannten Art.

Die Verwendung von kunststoffhaltigen Deckschichten für Belagselemente, insbesondere für Vinylbeläge und/oder Laminatböden, ist in der Praxis aufgrund von geringen Herstellungskosten bevorzugt. Kunststoffhaltige Deckschichten sind besonders abrieb- und rissfest bzw. weisen eine hohe Verschleißresistenz auf. Die Deckschichten für das Belagselement stellen dabei das Dekor des Belags bereit bzw. weisen ein solches Dekor auf. Durch die Verwendung von kunststoffhaltigen Deckschichten wird die Möglichkeit geschaffen, unterschiedliche druckbare Dekore einsetzen und verwenden zu können, so dass eine hohe Flexibilität im Hinblick auf die Gestaltung des Belages ermöglicht wird. Darüber hinaus erfüllt eine Kunststoff aufweisende Deckschicht hohe Anforderungen im Hinblick auf die Hygiene des Belages. Kunststoffhaltige Decksichten der vorgenannten Art weisen jedoch in der Regel das Material Polyvinylchlorid (PVC) auf. Wird das Material PVC verwendet, ist es in der Praxis üblich, gesundheitsgefährdende Weichmacher dem Material zuzufügen.

Ferner ist es aus der Praxis bekannt, auf den Einsatz von Polyvinylchlorid (PVC) in den Belag aus gesundheitlichen Gründen zu verzichten. So kann bei einer Polyvinylchlorid-freien Deckschicht der Einsatz von Weichmachern oder weiteren anderen schädlichen Zusatzstoffen vermieden werden. Gerade Weichmacher für Polyvinylchlorid sind gesundheitsgefährdend und somit zu vermeiden. Daher werden im Stand der Technik für die kunststoffhaltige Deckschicht solche Kunststoffe eingesetzt, die Polyvinylchlorid-frei sind und somit auch keine Weichmacher für das Polyvinylchlorid benötigen.

Um die Haptik und das gesamte Erscheinungsbild des Belagselementes zu verbessern, ist es im Stand der Technik bekannt, dass die PVC-freie Deckschicht eine Oberflächenstrukturierung aufweist, die beispielsweise im Zuge der Verpressung der Deckschicht eingebracht werden kann. Aufgrund von Restriktionen beim Herstellungsprozess genügt diese Oberflächenstrukturierung jedoch keinen hohen Anforderungen im Hinblick auf die Haptik, insbesondere da eine Strukturierung nur in der obersten Schicht der Deckschicht möglich ist. So können nur eher vergleichsweise geringe Tiefen der Strukturierung erzeugt werden, die kaum vom Nutzer wahrgenommen werden. Letztlich gelingt keine "realistische" Prägung der Strukturierung bei Deckschichten, die Polyvinylchlorid-frei ausgebildet sind.

Demnach kann bei einer Polyvinylchlorid-freien Deckschicht zwar der Vorteil erreicht werden, dass eine Gesundheitsgefährdung vermieden werden kann, jedoch ergeben sich Nachteile im Hinblick auf das gesamte Erscheinungsbild und insbesondere im Hinblick auf die Haptik der Deckschicht.

Die EP 2 883 712 betrifft einen Bodenbelag und ein Verfahren zur Herstellung des Bodenbelages. Der Bodenbelag weist eine Substratschicht, eine Dekorschicht und eine transparente Verschleißschicht auf.

Die US 2017/0254095 A1 betrifft ein Bodenpaneel, das einen Kern, eine Bedruckung und eine Verschleißschicht aufweist.

Die US 2018/0202170 A1 betrifft ein Bodenbelagsmaterial, das zumindest eine geschäumte Schicht und ein bedrucktes Dekor hierauf aufweist.

Die DE 10 2011 001807 A1 betrifft ein weiteres Bodenpaneel, bei welchem sich die Struktur sowohl auf der der Nutzseite zugewandten Oberseite als auch auf der der Nutzseite abgewandten Unterseite des Schichtenverbundes abzeichnet.

Aufgabe der vorliegenden Erfindung ist es nun, die vorgenannten Nachteile des Standes der Technik zu vermeiden oder zumindest im Wesentlichen zu reduzieren.

Die vorgenannte Aufgabe ist erfindungsgemäß bei einem Verfahren zur Herstellung einer Polyvinylchlorid-freien Deckschicht für ein Belagselement zumindest im Wesentlichen dadurch gelöst, dass das Verfahren die nachfolgend angegebenen Verfahrensschritte, bevorzugt in der angegebenen Reihenfolge, umfasst:
A) Bereitstellen einer Kunststoff aufweisenden und/oder daraus bestehenden Basisschicht;
B) Bedrucken einer einer Nutzseite zugewandten Oberseite der Basisschicht mit einem Dekor;
C) Verbinden, nämlich Kaschieren durch Druck und/oder Wärme, einer, vorzugsweise transparenten,
   Nutzschicht mit der bedruckten Basisschicht zur Bildung eines, bevorzugt festen, Schichtenverbundes;
D) Prägen des Schichtenverbundes zumindest bereichsweise, vorzugsweise vollflächig, mit einer mit dem Dekor zumindest im Wesentlichen synchronen Struktur, wobei die Struktur so geprägt wird, dass sie sich sowohl auf der der Nutzseite zugewandten Oberseite als auch zumindest bereichsweise auf der der Nutzseite abgewandten Unterseite des Schichtenverbundes abzeichnet;
E) Aufbringen einer Oberflächenversiegelungsschicht, bevorzugt einer Lackschicht, auf die der Nutzseite zugewandten Oberseite des Schichtenverbundes;
F) optional: Härten der Oberflächenversiegelungsschicht, bevorzugt der Lackschicht.

Nachfolgend wird unter anderem auf die Reihenfolge der Verfahrensschritte eingegangen. Es versteht sich in diesem Zusammenhang, dass die Bezeichnung "vor" sich auf vorherige und nicht auf den exakt vorherigen Verfahrensschritt bezieht. Wird beispielsweise der Verfahrensschritt Y vor dem Verfahrensschritt Z durchgeführt, so ist das so auszulegen, dass auch nach Durchführung des Schrittes Y und vor Durchführung des Schrittes Z die Prozessschritte X und/oder P durchgeführt werden können.

Selbiges gilt für die Bezeichnung "nach". Wird beispielsweise der Verfahrensschritt Y nach dem Verfahrensschritt Z durchgeführt, so ist das so auszulegen, dass auch nach Durchführung des Schrittes Z und vor Durchführung des Schrittes Y die Prozessschritte X und/oder P durchgeführt werden können.

Unter einer Deckschicht wird im Rahmen der vorliegenden Erfindung insbesondere auch ein Mehrschichtverbund mit wenigstens zwei Schichten und/oder Lagen verstanden, der aus einzelnen Lagen aufgebaut sein kann, die bevorzugt - im Endzustand -fest miteinander verbunden sind.

Erfindungsgemäß versteht es sich, dass die Verfahrensschritte A) bis F) auch in einer unterschiedlichen Reihenfolge durchgeführt werden können. Bevorzugt werden zunächst die Verfahrensschritte A), B) und C) nacheinander durchgeführt. Anschließend können die Verfahrensschritte D) bis F) in weiteren Ausführungsformen auch in einer unterschiedlichen Reihenfolge durchgeführt werden.

Ferner versteht es sich, dass der Verfahrensschritt F) optional durchführbar ist. Unter einem "Härten" wird erfindungsgemäß auch eine Selbsthärtung und/oder Selbsttrocknung der Oberflächenversiegelungsschicht verstanden.

Die Oberflächenversiegelungsschicht kann als Oberflächenbeschichtung und/oder als Lackschicht ausgebildet sein. Das Material der Oberflächenversiegelungsschicht kann insbesondere wenigstens eine Polymerverbindung umfassen und/oder daraus bestehen. Vorzugsweise ist das Material der Oberflächenversiegelungsschicht chemisch hergestellt worden.

Insbesondere können Lacke zur Oberflächenversiegelung genutzt werden. Unter einem Lack wird insbesondere ein flüssiger und/oder pulverförmiger Beschichtungsstoff verstanden, der auf eine Fläche auftragbar ist. Durch verschiedene chemische und/oder physikalische Vorgänge, die auch eine Selbsttrocknung und/oder Selbsthärtung umfassen können, kann die Beschichtung zu einem, bevorzugt durchgehenden und/oder festen, Film ausgebildet werden.

Vorzugsweise kann die Lackschicht als Material Harze, Dispersionen und/oder Lösemittel aufweisen.

Darüber hinaus kann die Oberflächenversiegelungsschicht neben chemischen Verbindungen auch "natürliche" Stoffe, wie Wachse, zur Versiegelung der Oberfläche aufweisen.

Unter einer dekorsynchronen Prägung ist im Sinne der vorliegenden Erfindung eine Prägung zu verstehen, bei der sich die geprägte Struktur an dem Dekor - d.h. das auf die Basisschicht gedruckte Dekor - orientiert. Die dekorsynchrone Prägung ist dabei insbesondere zumindest im Wesentlichen synchron zu dem Dekor oder zu einer Mehrzahl von Elementen, wie beispielsweise Risse, Äste oder dergleichen, ausgebildet.

Erfindungsgemäß kann auch vorgesehen sein, dass die dekorsynchrone Prägung nur bereichsweise durchgeführt wird, wobei die Basisschicht auch weitere Bereiche oder das Dekor weitere Elemente umfasst, die eine dekorasynchrone Prägung oder keine Prägung bzw. Strukturierung aufweisen.

Letztlich wird unter einer dekorsynchronen Prägung oder einer sogenannten "Synchronpore" verstanden, dass beispielsweise im gedruckten Dekor dargestellte Vertiefungen auch tatsächliche Vertiefungen im Schichtenverbund bzw. in der Deckschicht sind. Dies kann jedoch nur für bestimmte Vertiefungen oder nur in bestimmten Bereichen vorgesehen sein. Die Vertiefungen sind nicht als Durchbruch ausgebildet, sondern im Bereich der Struktur ist insbesondere der Schichtenverbund eingeengt bzw. eingeprägt, insbesondere eingedrückt.

Die Vertiefungen der Struktur können in Längs-, Quer- sowie dazwischen verlaufenden Richtungen des Belagselementes bzw. der Deckschicht verlaufen. Gleichzeitig können die Vertiefungen aber auch unterschiedliche Formen aufweisen, beispielsweise gebogen ausgebildet sein, insbesondere entsprechend der Vorgabe des gedruckten Dekors.

Darüber hinaus können die Vertiefungen punktuell in einem Bereich und insbesondere langgestreckt in einem weiteren Bereich verlaufen. Dies ist insbesondere abhängig von dem gewählten Dekor, das auf die Basisschicht aufgedruckt worden ist.

Ferner können sich die Vertiefungen der Struktur auch über mehrere strukturelle Schichten erstrecken bzw. mehrere strukturelle Schichten aufweisen.

In der Praxis übliche Dekore sind Holzmotive und/oder Steinmotive, wobei sich die "Synchronpore" bzw. die eingeprägte Struktur an dem gewählten Dekor orientiert. Letztlich können aber auch beliebige Dekore mit einer dekorsynchronen Struktur versehen werden. Insbesondere können, wie zuvor erläutert, auch nur einzelne Elemente oder einzelne Bereiche eines Dekors, wie beispielsweise markante Risse, Äste, Blumen o. dgl., synchron geprägt werden.

Darüber hinaus wird insbesondere noch unter einer dekorsynchronen Prägung eine solche Prägung verstanden, die Toleranzen von maximal 3 mm in Höhe und/oder Breite in der Synchronität von Struktur und Dekor aufweist.

Gegenüber dem Stand der Technik ergibt sich der wesentliche Vorteil, dass das gesamte Erscheinungsbild der Deckschicht bzw. des mit der Deckschicht versehenen Belagselementes verbessert werden kann, da anstatt einer dekorasynchronen Oberflächenstruktur eine zumindest im Wesentlichen dekorsynchrone Oberflächenstruktur bereitgestellt werden kann.

Ferner wird erfindungsgemäß die Möglichkeit geschaffen, nicht nur die oberste Schicht der Deckschicht zu strukturieren, sondern auch weitere Schichten, beispielsweise die Basisschicht. Dies ermöglicht erfindungsgemäß insbesondere die erreichte maximale Tiefe der Oberflächenstrukturierung bzw. der Struktur zu erhöhen.

Die geprägte Struktur kann sich insbesondere durch die gesamte Stärke bzw. Dicke der Deckschicht durchzeichnen bzw. abzeichnen, was letztlich zur Verbesserung der Haptik beiträgt. Es versteht sich dabei, dass sich die Oberflächenstrukturierung auf der Oberseite zur der Oberflächenstrukturierung auf der Unterseite der Deckschicht unterscheiden kann. So kann vorgesehen sein, dass die erreichte maximale Tiefe der Oberflächenstrukturierung auf der Oberseite die maximale Höhe der Oberflächenstrukturierung auf der Unterseite übersteigt.

Unter der Nutzseite wird im Sinne der vorliegenden Erfindung diejenige Seite verstanden, die im Einbauzustand Beanspruchungen ausgesetzt ist und insbesondere als Lauffläche oder Außenfläche dient. Wird als Belagselement beispielsweise ein Bodenbelagselement ausgebildet, so ist die Nutzseite die dem Raum zugewandte Außenseite des Belagselementes.

Besonders bevorzugt ist vorgesehen, dass sich die geprägte Struktur des Schichtenverbundes an der Unterseite des Schichtenverbundes nur so stark abzeichnet, dass sie in einem weiteren Herstellungsverfahren problemlos mit einer weiteren Trägerschicht bzw. Trägerplatte oder Trägerfolie verbunden, insbesondere aufkaschiert, werden kann. Eine ausreichende Haftfähigkeit der Deckschicht kann somit für die Nutzung als Bodenbelag gewährleistet werden.

Die Deckschicht kann letztlich als Halbteil für die Herstellung von Belagselementen genutzt werden. Insbesondere kann die Deckschicht als Halbteil auch vor der Verbindung mit der Trägerplatte bzw. dem Belagselement zwischengelagert werden. So können unterschiedliche Belagselemente durch die Anbindung von unterschiedlichen Deckschichten erreicht werden, insbesondere wobei der weitere Aufbau des Belagselementes zumindest im Wesentlichen gleich bzw. baugleich sein kann.

Durch das Kaschieren der Deckschicht kann insbesondere eine individuell vorgebbare Optik des Belagselementes erreicht werden. Durch die geprägte dekorsynchrone Struktur kann darüber hinaus auch das gesamte Erscheinungsbild und die Haptik insbesondere bei geringen Herstellungskosten verbessert werden.

Die erfindungsgemäße Trennung der Produktionsverfahren der Herstellung der Deckschicht und der Anbindung der Deckschicht an eine Trägerplatte des Belagselementes ermöglicht vorzugsweise, die Herstellung des gesamten Belagselementes zu vereinfachen und die Herstellungskosten aufgrund einer nicht benötigten Inline-Fertigung zur Anbindung der Deckschicht zu reduzieren.

Erfindungsgemäß kann des Weiteren eine Kunststoff aufweisende und/oder daraus bestehende Deckschicht, die kein Polyvinylchlorid enthält, mit der Synchronstruktur versehen werden, wobei das Ausdehnungsverhalten des Schichtenverbundes durch die Trennung des Prägen der Struktur von der Kaschierung auf das Belagselement besser berücksichtigt werden kann.

Darüber hinaus ergeben sich Kostenersparnisse durch die Verringerung des Ausschusses wegen sukzessiver Durchführung von Kaschierung bzw. Verbindung und Strukturierung.

Bei einer besonders bevorzugten Ausführungsform ist vorgesehen, dass das Aufbringen der Oberflächenversiegelungsschicht, bevorzugt der Lackschicht (vgl. Verfahrensschritt E), vor oder nach der Prägung des Schichtenverbundes erfolgt. Somit kann der Verfahrensschritt E) vor oder nach dem Verfahrensschritt D) durchgeführt werden. Vorteilhaft an dem Aufbringen der Oberflächenversiegelungsschicht (Verfahrensschritt E) nach dem Prägen (Verfahrensschritt D) ist, dass sich die Oberflächenversiegelungsschicht, insbesondere der Lack, an die eingeprägte Struktur anpassen kann und insbesondere nicht durch eine Prägung beschädigt wird.

In Abhängigkeit von unterschiedlichen Verfahrensausgestaltungen kann es jedoch auch sinnvoll sein, vor der Prägung die Oberflächenversiegelungsschicht aufzubringen, insbesondere um darunter befindliche Schichten beim Prägevorgang zu schützen.

Das Härten der Oberflächenversiegelungsschicht (Verfahrensschritt F) wird nach dem Aufbringen der Oberflächenversiegelungsschicht (Verfahrensschritt E) durchgeführt. Jedoch kann das Härten ebenfalls vor oder nach der Prägung (Verfahrensschritt D) erfolgen. Die Reihenfolge kann davon abhängen, ob die Oberflächenversiegelungsschicht vor oder nach dem Prägen des Schichtenverbundes auf dem Schichtenverbund aufgebracht worden ist. Demgemäß kann bei einer weiteren Ausführungsform vorgesehen sein, dass die Oberflächenversiegelungsschicht auf den Schichtenverbund aufgebracht wird und der Schichtenverbund anschließend geprägt wird, wobei das Härten nach der Prägung durchgeführt wird. Grundsätzlich kann aber auch vorgesehen sein, dass die Oberflächenversiegelungsschicht vor dem Prägen aufgebracht und anschließend - auch vor dem Prägen - gehärtet wird. So können die Verfahrensschritte E) und F) vor dem Verfahrensschritt D) durchgeführt werden.

Vorzugsweise wird das Härten der Oberflächenversiegelungsschicht, bevorzugt der Lackschicht, mittels Elektronenstrahlhärten durchgeführt. Die Elektronenstrahlhärtung birgt den Vorteil, dass sich die Oberflächenversiegelungsschicht bzw. der Lack an den eingeprägten Strukturen anordnet und nach der Elektronenstrahlhärtung weiterhin an den eingeprägten Strukturen angeordnet bzw. "haften" bleibt. Darüber hinaus kann durch die Elektronenstrahlhärtung vermieden werden, den gesamten Schichtenaufbau der Deckschicht zu erwärmen bzw. zu erhitzen, was andernfalls Einfluss auf die Materialbeschaffenheit der weiteren Schichten hätte. Ferner ist die Härtung der Oberflächenversiegelungsschicht bzw. der Lackschicht mit niederenergetisch beschleunigten Elektronen eine in der Praxis nicht nur moderne, sondern auch extrem zeitnah (d.h. schnell) wirkende Methode, die darüber hinaus auch ressourcenschonend und energiesparsam durchgeführt werden kann. Das Elektronenstrahlhärten führt letztlich insbesondere dazu, dass sich Moleküle in reaktiven Lacksystemen bei Normaldruck-Atmosphäre miteinander vernetzen können. Durch die schonende Bearbeitung mittels Elektronenstrahlhärtung können auch temperaturempfindliche weitere Schichten bzw. ein temperaturempfindlicher Schichtenverbund verwendet werden.

Die gehärtete Oberflächenversiegelungsschicht weist eine hohe Abriebfestigkeit bei gleichzeitiger Temperaturbeständigkeit auf. Darüber hinaus ist eine sehr gute Haftung zwischen der der Oberflächenversiegelungsschicht zugwandten Oberseite der Nutzschicht und der Oberflächenversiegelungsschicht vorhanden. Außerdem kann eine hohe UV-Beständigkeit des gesamten Schichtenverbundes bzw. der gesamten Deckschicht durch die elektronenstrahlgehärtete Oberflächenversiegelungsschicht ermöglicht werden.

Bei einer weiter bevorzugten Ausführungsform des Erfindungsgedankens ist vorgesehen, dass eine erste Haftvermittlerschicht unterseitig auf die Basisschicht vor der Kaschierung bzw. Verbindung mit der Nutzschicht aufgebracht wird. Die erste Haftvermittlerschicht kann auch als Primer-Schicht bezeichnet werden und insbesondere zur späteren Verbindung der Deckschicht mit der Trägerplatte des Belagselementes vorgesehen sein. Die Unterseite der Basisschicht kann nämlich insbesondere die Außenseite (unterseitig) der Deckschicht bilden. Letztlich kann die "Klebefunktion" der Deckschicht durch die erste Haftvermittlerschicht bereitgestellt werden, so dass eine vereinfachte Verbindung bzw. ein vereinfachtes Kaschieren mit der Trägerplatte des Belagselementes gewährleistet werden kann.

Alternativ oder zusätzlich ist bevorzugt vorgesehen, dass eine weitere Haftvermittlerschicht zumindest bereichsweise nach Bildung des Schichtenverbundes (vgl. Verfahrensschritt C) und vor dem Aufbringen der Oberflächenversiegelungsschicht (vgl. Verfahrensschritt E) auf der der Basisschicht abgewandten Oberseite der Nutzschicht aufgebracht wird. Zum Zeitpunkt des Aufbringens der weiteren Haftvermittlerschicht, die auch als weitere Primer-Schicht bezeichnet werden kann, ist insbesondere die Oberseite der Nutzschicht die oberseitige Außenfläche des Schichtenverbundes.

Die Oberflächenversiegelungsschicht, bevorzugt die Lackschicht, kann insbesondere auf die weitere Haftvermittlerschicht aufgebracht werden. Die weitere Haftvermittlerschicht kann somit die Verbindung der Nutzschicht mit der Oberflächenversiegelungsschicht verbessern und bevorzugt eine dauerfeste Verbindung zwischen der Nutzschicht und der Oberflächenversiegelungsschicht gewährleisten.

In diesem Zusammenhang versteht es sich, dass die weitere Haftvermittlerschicht auch unabhängig von der ersten Haftvermittlerschicht vorgesehen sein kann. Die Namensgebung "weitere" Haftvermittlerschicht ermöglicht letztlich die Unterscheidung zur ersten Haftvermittlerschicht.

Bevorzugt weist sowohl die erste und/oder die weitere Haftvermittlerschicht einen Klebstoff als Material auf, insbesondere wobei der Klebstoff eine Harzbasis, insbesondere Kunstharzbasis, aufweist.

Auch die weitere Haftvermittlerschicht kann nach dem Prägen der Struktur aufgebracht werden, so dass sich die weitere Haftvermittlerschicht an die eingeprägte Struktur anordnen kann.

Im Verfahrensschritt C wird die Nutzschicht mit der bedruckten Basisschicht verbunden, nämlich durch Druck und/oder Wärme kaschiert, bevorzugt thermokaschiert.

Darüber hinaus kann beim Kaschieren ein Kaschiermittel, insbesondere ein Klebstoff, zur Verbindung der Nutzschicht mit der Basisschicht genutzt werden. Somit kann nach dem Kaschieren zwischen der der Nutzschicht zugewandten Oberseite der Basisschicht und der der Basisschicht zugewandten Unterseite der Nutzschicht wenigstens eine Kaschiermittelschicht angeordnet sein. Letztlich ist die Kaschiermittelschicht eine Klebstoffschicht, die bereichsweise, vorzugsweise vollflächig, zwischen der Nutzschicht und der Basisschicht angeordnet werden kann. Insbesondere kann als Kaschiermittel ein Urethan-Klebstoff, Lack, Leim und/oder Harz verwendet werden. Das Kaschiermittel wird bevorzugt auch in einem Thermokaschier-Prozess eingesetzt. Ferner kann das Kaschiermittel vor dem Kaschieren auf die der Nutzseite abgewandten Seite der Nutzschicht und/oder auf der Oberseite der Basisschicht zumindest bereichsweise aufgetragen werden. Nach dem Auftrag der Kaschiermittelschicht kann die Kaschierung, bevorzugt mittels Druck und/oder Wärme, zur festen Verbindung der Nutzschicht und der Basisschicht durchgeführt werden.

Alternativ oder zusätzlich ist vorgesehen, dass die Nutzschicht mit der Basisschicht zur Bildung des Schichtenverbundes (vgl. Verfahrensschritt C) mittels Laminieren verbunden wird. Unter einem Laminiervorgang ist insbesondere ein stoffschlüssiges, thermisches Fügeverfahren ohne die Verwendung Hilfsmaterialien zu verstehen. So kann beim Laminieren insbesondere auf den Auftrag eines Kaschiermittels verzichtet werden. Bevorzugt wird als Verbindungsverfahren Heißlaminieren durchgeführt, bei dem insbesondere die klebenden Eigenschaften der Nutzschicht und/oder der Basisschicht zur festen Verbindung des Schichtenverbundes genutzt werden können.

Bei einer weiteren bevorzugten Ausführungsform erfolgt das Prägen des Schichtenverbundes (vgl. Verfahrensschritt D) mittels eines Strukturzylinders. Insbesondere wird der Schichtenverbund zur Prägung geprägt und/oder gepresst und/oder erwärmt, vorzugsweise mittels Druck und/oder Wärme. Der Strukturzylinder setzt insbesondere eine sich wiederholende Abfolge des Dekors voraus bzw. ein sich in aufeinanderfolgenden Abschnitten wiederholendes Dekormuster, insbesondere wobei die Länge eines Abschnittes von der Mantelfläche bzw. dem Umfang des Zylinders abhängt oder umgekehrt.

Alternativ oder zusätzlich kann ein Strukturpapier verwendet werden. Bei Strukturpapieren ist insbesondere die Länge eines "Strukturabschnitts" nicht abhängig vom Umfang des Strukturzylinders. Es können demnach kürzere oder längere Strukturabschnitte realisiert werden.

Vorzugsweise wird ein Druckzylinder zum Auftrag der Dekorschicht verwendet. Insbesondere kann sich auch eine Ausdehnung beim Drucken ergeben, beispielsweise durch den Druck des Druckzylinder und/oder durch den Kontakt mit Farbe und/oder Wasser, insbesondere bei einem Druck auf Papier. Diese Ausdehnung ist vorzugsweise bei der der Erstellung des Druckzylinders zu berücksichtigen. Insbesondere sind Druckzylinder und/oder Strukturzylinder für eine "Synchronpore" aufeinander abzustimmen, so dass das durch den Druckzylinder erzeugte Dekor im folgenden Schritt durch einen entsprechenden Strukturzylinder dekorsynchron geprägt werden kann.

Bei der Verwendung eines Strukturzylinders und/oder Druckzylinders ist insbesondere eine Kalibrierung des Druck- und/oder Prägeverfahrens vorteilhaft. So kann in einem Kalibrierverfahren, das insbesondere dem Herstellungsverfahren vorgelagert ist, in einem ersten Prozessschritt der Ausdehnungskoeffizient des Schichtenverbundes (beim Strukturzylinder) bzw. der Deckschicht bestimmt werden, insbesondere wobei die diesbezüglich bestimmten Informationen bei der Herstellung des entsprechenden Strukturzylinders und/oder Druckzylinders - insbesondere in Abhängigkeit des zu druckenden Dekors - genutzt werden.

Beim Druckverfahren mit einem Druckzylinder bezieht sich insbesondere die Ausdehnung auf die Basisschicht und insbesondere nicht auf die gesamte Deckschicht, insbesondere da der Druck vor Erstellung des Schichtenverbundes erfolgt.

Es kann vorgesehen sein, dass der der Strukturzylinder an bestimmten Markierungspunkten sogenannte Ausrichtungsmarkierungen, die auch als Passermarken bezeichnet werden, aufweist. Korrespondierende Passermarken bzw. Ausrichtungsmarkierungen können an der bedruckten Deckschicht und/oder an dem Druckzylinder vorgesehen sein. Ein Abgleich insbesondere durch optische Systeme, wie Kameras, ermöglicht eine Justierung und insbesondere eine bevorzugt dekorsynchrone Prägung.

Alternativ oder zusätzlich können die Passermarken auch genutzt werden, um die Synchronität von Dekor und Struktur im Nachhinein bzw. nach Herstellung der Deckschicht zu überprüfen. So kann iterativ eine Anpassung Strukturzylinders sowie des gedruckten Musters erreicht werden, so dass eine möglichst genaue dekorsynchrone Prägung des Dekors ermöglicht wird.

Letztlich ist eine Abweichung zwischen der Struktur auf dem Strukturzylinder und der getrockneten geprägten Struktur, bevorzugt der Deckschicht, aufgrund des Ausdehnungsverhaltens des erwärmten Materials vorhanden.

Das Dekor kann auf die Basisschicht in einer weiteren bevorzugten Ausführungsform mittels unterschiedlicher Druckverfahren, wie Offsetdruck, Flexo-Druck, Digitaldruck und/oder Tiefdruck, bedruckt werden. Besonders bevorzugt wird das Dekor auf die Basisschicht mittels eines Rotationstiefdruckverfahrens aufgetragen. Das Druckverfahren kann in Abhängigkeit der zu bedruckenden Basisschicht und/oder in Abhängigkeit des gewünschten Druckbildes bzw. zu erzeugenden Dekors ausgewählt werden.

Vorzugsweise ist der Druck des Dekors aus mehreren einzelnen Bildlagen aufgebaut, insbesondere wobei die Bedruckung durch ein Rotationstiefdruckverfahren erfolgt. Ein Rotationstiefdruckverfahren ermöglicht insbesondere eine hohe Druckgeschwindigkeit und somit bevorzugt geringe Herstellungskosten.

Darüber hinaus betrifft die vorliegende Erfindung eine Polyvinylchlorid-freie Deckschicht, vorzugsweise eine Kunststoff aufweisende und/oder daraus bestehende Deckschicht, die zur Verbindung, bevorzugt zur Kaschierung, mit einer Trägerplatte eines Belagselementes vorgesehen ist. Insbesondere ist die Deckschicht nach einem Verfahren nach einem der vorgenannten Ausführungsformen hergestellt worden. Die erfindungsgemäße Deckschicht weist eine mit einem Dekor bedruckte Basisschicht und eine Nutzschicht auf. Die Basisschicht und die Nutzschicht sind fest miteinander zu einem Schichtenverbund verbunden.

Es versteht sich, dass der Schichtenverbund auch weitere Schichten umfassen kann. Der Schichtenverbund ist mit einer zumindest bereichsweise vorgesehenen und mit dem Dekor zumindest im Wesentlichen synchronen Struktur geprägt. Die geprägte Struktur zeichnet sich sowohl auf der Oberseite als auch zumindest bereichsweise auf der Unterseite des Schichtenverbundes ab. Ebenfalls weist die Deckschicht eine gehärtete Oberflächenversiegelungsschicht, bevorzugt eine Lackschicht, auf, die auf der Oberseite des Schichtenverbundes vorgesehen ist.

Zur Vermeidung von unnötigen Ausführungen und/oder Wiederholungen darf auf die vorangegangenen Ausführungen verwiesen werden, die in gleicher Weise erfindungsgemäß auch für die Polyvinylchlorid-freie Deckschicht gelten können. Insbesondere darf im Hinblick auf Vorteile der Polyvinylchlorid-freien Deckschicht auf die vorstehenden Erläuterungen verwiesen werden.

Vorzugsweise kann die Deckschicht, insbesondere durch eine Kaschierung mit einem Kaschiermittel, ohne wesentliche Reduzierung der Strukturtiefe auf die Trägerschicht aufgebracht werden. Das Kaschiermittel kann unterschiedliche Erhöhungen und/oder Vertiefungen bzw. Unebenheiten an der Unterseite der Deckschicht ausgleichen und/oder ausfüllen. Die Tiefe der Struktur der erfindungsgemäßen Deckschicht wird bevorzugt folglich bei der Verbindung von Deckschicht und Trägerplatte bzw. Trägerschicht nicht ungewollt geglättet - beispielsweise durch Verpressen, durch hohen Druck und/oder durch Hitze.

Die sich an der Oberseite der Deckschicht, die letztlich der Nutzseite zugewandt ist, abzeichnende Struktur kann sich von der sich an der Unterseite abzeichnenden Struktur unterscheiden. So kann die Oberseite beispielsweise zumindest im Wesentlichen vollflächig mit der zumindest im Wesentlichen dekorsynchronen Struktur versehen sein, wobei sich die unterseitige Struktur nur bereichsweise abzeichnen kann. Beispielsweise können sich auf der Unterseite nur die besonders tiefen Vertiefungen der oberseitigen Struktur abzeichnen.

Vorzugsweise weist die Struktur, bevorzugt auf der Oberseite des Schichtenverbundes und/oder der Deckschicht, eine maximale Tiefe von bis zu 1 mm, bevorzugt bis zu 0,5 mm, weiter bevorzugt zwischen 0,05 mm bis 0,2 mm, auf. Insbesondere beträgt die maximale Tiefe auf der Oberseite des Schichtenverbundes der geprägten Struktur 0,16 mm +/- 0,05 mm. Die maximale Tiefe kann somit im Vergleich zum Stand der Technik deutlich erhöht werden, vorzugsweise um wenigstens 75%.

Alternativ oder zusätzlich kann vorgesehen sein, dass die Struktur auf der Unterseite des Schichtenverbundes und/oder auf der Unterseite der Deckschicht eine maximale Höhe von höchstens 100 µm, bevorzugt höchstens 90 µm, weiter bevorzugt zwischen 30 µm bis 90 µm, aufweist. Die vorgenannten Größenangaben verdeutlichen insbesondere, dass sich die maximale Tiefe der Struktur an der Oberseite und von der maximalen Höhe der Unterseite unterscheidet. In diesem Zusammenhang versteht es sich, dass die maximale Tiefe auf der Oberseite zu einer, insbesondere maximalen, Höhe der zu der Vertiefung auf der Oberseite korrespondierenden Erhebung an der Unterseite korrespondiert. Die maximale Höhe auf der Unterseite ist dabei derart zu verstehen, dass sie den Abstand zwischen der Grundfläche bzw. Normalebene und der Erhebung angibt.

Die Deckschicht weist bevorzugt eine Dicke zwischen 0,1 mm, bevorzugt zwischen 0,1 mm und 0,4 mm, weiter bevorzugt zwischen 0,2 mm bis 0,3 mm, auf.

Vorzugsweise weist die Basisschicht und/oder die Nutzschicht als Polyvinylchlorid-freies Material einen thermoplastischen Kunststoff auf und/oder besteht daraus. Als thermoplastischer Kunststoff ist insbesondere Polypropylen, Polyethylen und/oder Polyurethan vorgesehen. Die vorgenannten Kunststoffe ermöglichen insbesondere ein ökologisches und nicht-gesundheitsschädliches Belagselement bzw. eine entsprechende Deckschicht.

Bei einer weiteren bevorzugten Ausführungsform ist die Basisschicht als Basisfilm und/oder als Basisfolie ausgebildet.

Des Weiteren betrifft die vorliegende Erfindung ein Belagselement, vorgesehen zur Verwendung als Boden-, Wand- und/oder Deckenbelagselement für einen Boden-, Wand- und/oder Deckenbelag. Das erfindungsgemäße Belagselement weist wenigstens eine Trägerplatte und wenigstens eine Deckschicht nach wenigstens einer der vorhergehenden Ausführungsformen auf. Die der Nutzseite abgewandte Unterseite der Deckschicht ist vorzugsweise fest mit der der Nutzseite zugewandten Oberseite der Trägerplatte verbunden.

Insbesondere kann wenigstens eine weitere Schicht zwischen Deckschicht und Trägerplatte angeordnet sein, vorzugsweise eine Elastizitätsschicht, eine Schall- und/oder Stoßabsorptionsschicht und/oder eine elektrische Funktionsschicht.

Im Zusammenhang mit dem erfindungsgemäßen Belagselement versteht es sich, dass die vorgenannten Ausführungen zu dem erfindungsgemäßen Verfahren sowie zu der erfindungsgemäßen Deckschicht in gleicher Weise auch für das erfindungsgemäße Belagselement gelten, ohne dass dies einer expliziten Erwähnung bedarf. Insbesondere darf im Zusammenhang auf bevorzugte Ausführungsformen und/oder Vorteile des erfindungsgemäßen Belagselementes auf die vorstehenden Ausführungen zu dem erfindungsgemäßen Verfahren und/oder zu der erfindungsgemäßen Deckschicht verwiesen werden.

Bei einer besonders bevorzugten Ausführungsform ist vorgesehen, dass an gegenüberliegenden Seiten der Trägerplatte korrespondierende Nut-Feder-Verbindungsgeometrien vorgesehen sind. Verbindungsgeometrien dienen insbesondere zur Ausbildung einer Klickverbindung. Ferner weisen die Verbindungsgeometrien eine eine Nut aufweisende Nutseite und eine der Nutseite gegenüberliegende, eine Feder aufweisende Federseite auf. In diesem Zusammenhang versteht es sich, dass sowohl die Längs- und/oder die Querseiten die entsprechenden Verbindungsgeometrien aufweisen können, so dass die Trägerplatte insbesondere randseitig umlaufende Verbindungsgeometrien aufweist. So können die Längsseiten zueinander korrespondierende Nut-Feder-Verbindungsgeometrien ausbilden, wobei auch die Querseiten der Trägerplatte zueinander korrespondierende Nut-Feder-Verbindungsgeometrien ausbilden können.

Alternativ oder zusätzlich kann vorgesehen sein, dass an gegenüberliegenden Seiten der Trägerplatte korrespondierende Druckknopf- und/oder Bajonettverbindungsgeometrien vorgesehen sein können. Letztlich dienen die vorgenannten Verbindungsgeometrien insbesondere zur einfachen Klickverbindung der Belagselemente. Dies ermöglicht ein einfaches und schnelles Verlegen, das insbesondere nicht von Fachpersonal durchgeführt werden muss.

Bevorzugt ist an der Unterseite der Trägerplatte ein Gegenzug angeordnet. Der Gegenzug kann letztlich der Unterseite der Trägerplatte zugewandt sein. Als Gegenzug kann vorzugsweise ein Kraftpapier und/oder eine Korkschicht und/oder eine Schicht aus expandiertem Polyolefin (XPO) vorgesehen sein. Der Gegenzug dient insbesondere dazu, dass sich das Belagselement nicht verformt.

Als Trägerplatte kann bei einer weiteren bevorzugten Ausführungsform eine HDF-Platte (hochdichte Faserplatte), eine Echtholzschicht und/oder eine MDF-Platte (mitteldichte Holzfaserplatte) vorgesehen sein. Alternativ oder zusätzlich kann auch vorgesehen sein, dass die Trägerplatte einen Kunststoff als Material aufweist und/oder daraus besteht. Als Kunststoff wird bevorzugt Polypropylen und/oder Polyethylen vorgesehen. Darüber hinaus ist besonders bevorzugt, dass die Trägerplatte Polyvinylchlorid-frei ausgebildet ist, so dass vorzugsweise ein Polyvinylchlorid-freies Belagselement bereitgestellt werden kann.

Die Trägerplatte kann darüber hinaus auch einen niedrigen Quellwert aufweisen und insbesondere zumindest im Wesentlichen wasserfest und/oder wasserresistent ausgebildet sein, vorzugsweise durch die Integration von Zusatzstoffen in die Trägerplatte, insbesondere Leime und/oder Harze.

Zudem kann die Trägerplatte auch mineralische Bestandteile aufweisen. Als mineralische Bestandteile können Kalziumkarbonat und/oder Talkum vorgesehen sein. Insbesondere kann die Trägerplatte auch Kunststoffe und/oder Mineralien aufweisen.

Darüber hinaus kann die Trägerplatte eine Schichtdicke von wenigstens 2 mm, bevorzugt zwischen 3 mm bis 10 mm, weiter bevorzugt zwischen 4 mm bis 7 mm, aufweisen.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Darstellung eines erfindungsgemäßen Verfahrensablauf zur Herstellung einer Polyvinylchlorid-freien Deckschicht gemäß einer ersten Ausführungsform,
- Fig. 2: eine schematische Darstellung eines erfindungsgemäßen Verfahrensablauf zur Herstellung einer Polyvinylchlorid-freien Deckschicht gemäß einer zweiten Ausführungsform,
- Fig. 3: eine schematische Darstellung eines erfindungsgemäßen Verfahrensablauf zur Herstellung einer Polyvinylchlorid-freien Deckschicht gemäß einer dritten Ausführungsform,
- Fig. 4: eine schematische Darstellung eines erfindungsgemäßen Verfahrensablauf zur Herstellung einer Polyvinylchlorid-freien Deckschicht gemäß einer vierten Ausführungsform,
- Fig. 5: eine schematische Darstellung eines erfindungsgemäßen Verfahrensablauf zur Herstellung einer Polyvinylchlorid-freien Deckschicht gemäß einer fünften Ausführungsform,
- Fig. 6: eine schematische Querschnittsdarstellung einer erfindungsgemäßen Deckschicht,
- Fig. 7: eine schematische Querschnittsdarstellung einer weiteren Ausführungsform einer erfindungsgemäßen Deckschicht,
- Fig.8: eine schematische Querschnittsdarstellung einer weiteren Ausführungsform einer erfindungsgemäßen Deckschicht,
- Fig. 9: eine schematische Querschnittsdarstellung einer weiteren Ausführungsform einer erfindungsgemäßen Deckschicht,
- Fig. 10: eine schematische Querschnittsdarstellung einer weiteren Ausführungsform einer erfindungsgemäßen Deckschicht,
- Fig. 11: eine schematische Querschnittsdarstellung einer weiteren Ausführungsform einer erfindungsgemäßen Deckschicht,
- Fig. 12: eine schematische Querschnittsdarstellung einer weiteren Ausführungsform einer erfindungsgemäßen Deckschicht,
- Fig. 13: eine schematische Querschnittsdarstellung eines erfindungsgemäßen Belagselementes,
- Fig. 14: eine schematische Querschnittsdarstellung eines erfindungsgemäßen Belagselementes gemäß einer weiteren Ausführungsform und
- Fig. 15: eine schematische perspektivische Darstellung eines erfindungsgemäßen Belagselements gemäß einer weiteren Ausführungsform.

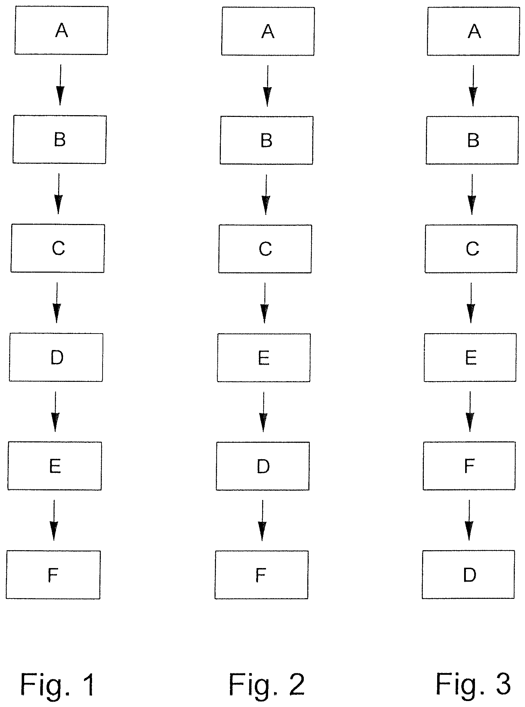

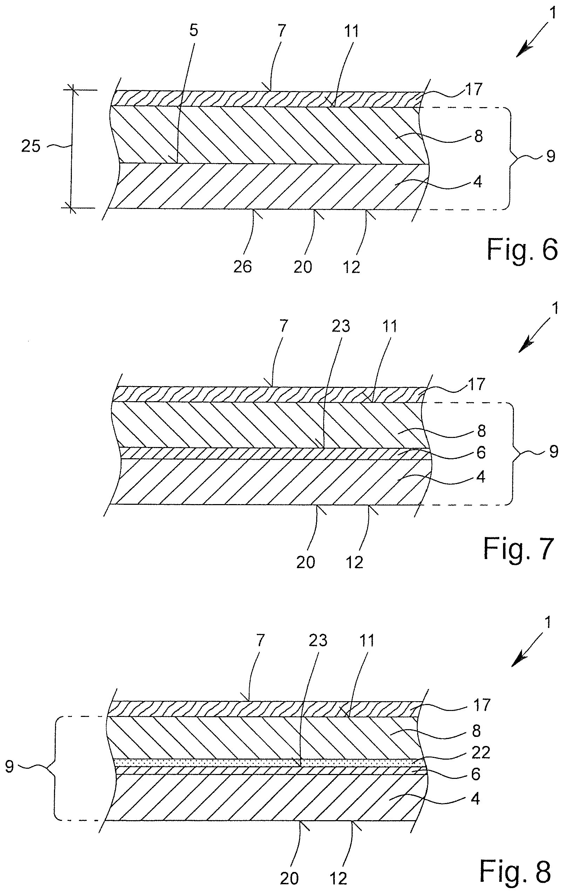

Fig. 1 zeigt ein Ablaufschema eines Verfahrens zur Herstellung einer Polyvinylchlorid-freien Deckschicht 1. Die Deckschicht 1 kann mehrschichtig aufgebaut sein, wie dies schematisch in Fig. 6 dargestellt ist. Die Deckschicht 1 kann zur Kaschierung bzw. zur Verbindung mit einer Trägerplatte 2 eines Belagselementes 3 vorgesehen sein.

In Fig. 1 sind die einzelnen Verfahrensschritte mit Buchstaben gekennzeichnet worden. Jeder Buchstabe referenziert in diesem Zusammenhang einen einzelnen Verfahrensschrift, wie nachfolgend dargelegt wird.

Der in Fig. 1 mit A bezeichnete Prozessschritt sieht das Bereitstellen einer Kunststoff aufweisenden und/oder daraus bestehenden Basisschicht 4 vor. Schematisch ist eine Basisschicht 4 beispielsweise in Fig. 6 dargestellt.

Im Anschluss zu dem Verfahrensschritt A ist im Schritt B vorgesehen, dass die Oberseite 5 der Basisschicht 4 mit einem Dekor 6 bedruckt wird. Durch Bedrucken mit dem Dekor 6 kann letztlich eine Dekorschicht 6 bereitgestellt werden. Die Oberseite 5 der Basisschicht 4 ist einer Nutzseite 7 zugewandt. Die Nutzseite 7 stellt letztlich die Benutzungsseite im Einbauzustand des Belagselementes 3 dar - beispielsweise die Lauffläche bei der Verwendung des Belagselementes 3 als Bodenbelagselement.

In Fig. 1 ist im Anschluss zu dem Verfahrensschritt B ist im Verfahrensschritt C vorgesehen, dass die Basisschicht 4 mit einer Nutzschicht 8 verbunden wird. Die Nutzschicht 8 ist insbesondere transparent bzw. zumindest im Wesentlichen transparent ausgebildet. Vorzugsweise ist im Verfahrensschritt B ein Kaschierverfahren zur Verbindung der Basisschicht 4 und der Nutzschicht 8 vorgesehen. Nach Verbinden der Schichten 4, 8 wird ein Schichtenverbund 9 erzielt, der miteinander fest verbundene Schichten 4, 8 aufweisen kann. Neben der Nutzschicht 8 und/oder der Basisschicht 4 kann der Schichtenverbund 9 auch weitere Schichten umfassen.

Bereits an dieser Stelle sei darauf hingewiesen, dass zwischen den einzelnen dargestellten Prozessschritten auch weitere Prozessschritte vorgesehen sein können. Letztlich wird in den dargestellten Ablaufschematas gemäß den Fig. 1 bis 5 die schematische Reihenfolge der dargestellten einzelnen Verfahrensschritte visualisiert.

Darüber hinaus können die aufeinanderfolgende Verfahrensschritte zumindest im Wesentlichen unmittelbar nacheinander oder zeitversetzt durchgeführt werden.

So kann zwischen dem Verfahrensschritt A und dem Schritt B beispielsweise ein weiterer Verfahrensschritt, wie eine Zwischenlagerung der Basisschicht, vorgesehen sein. Auch können sich die zeitlichen Abstände zwischen den einzelnen aufeinanderfolgenden Prozessschritten unterscheiden.

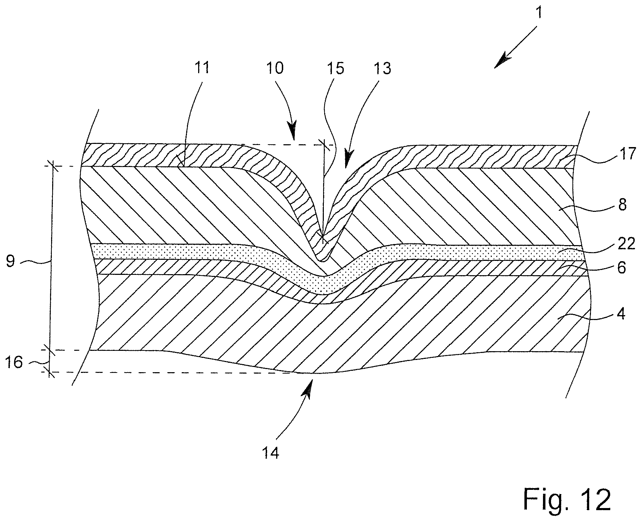

Fig. 1 zeigt weiter, dass nachfolgend zu dem Prozessschritt C im Verfahrensschritt D vorgesehen ist, dass der Schichtenverbund 9 zumindest bereichsweise, vorzugsweise vollflächig, mit einer mit dem Dekor 6 zumindest im Wesentlichen synchronen Struktur 10 geprägt wird. Die Struktur 10 wird dabei so geprägt, dass sie sich sowohl auf der der Nutzseite 7 zugewandten Oberseite 11 des Schichtenverbundes 9 als auch auf zumindest bereichsweise der der Nutzseite 7 zugewandten Unterseite 12 des Schichtenverbundes 9 abzeichnet. Die Struktur 10 kann auf der Oberseite 11 durch Vertiefungen 13 gebildet werden. Zu den Vertiefungen 13 auf der Oberseite 11 können Erhöhungen 14 auf der Unterseite 12 des Schichtenverbundes 9 korrespondieren. In diesem Zusammenhang kann sich die Tiefe 15 einer ersten Vertiefung 13 von der Höhe 16 der zur der ersten Vertiefung 13 korrespondierenden ersten Erhöhung 14 unterscheiden, so dass die Höhe 16 kleiner als die Tiefe 15 ausgebildet sein kann, wie dies schematisch beispielsweise in Fig. 12 dargestellt ist.

Nach dem Verfahrensschritt D kann im Verfahrensschritt E, wie schematisch aus Fig. 1 ersichtlich wird, eine Oberflächenversiegelungsschicht 17, bevorzugt eine Lackschicht, auf die der Nutzseite 7 zugewandten Oberseite 11 des Schichtenverbundes 9 aufgebracht werden.

Im Anschluss zu dem Verfahrensschritt E ist im Verfahrensschritt F vorgesehen, dass die Oberflächenversiegelungsschicht 17, bevorzugt die Lackschicht, gehärtet wird.

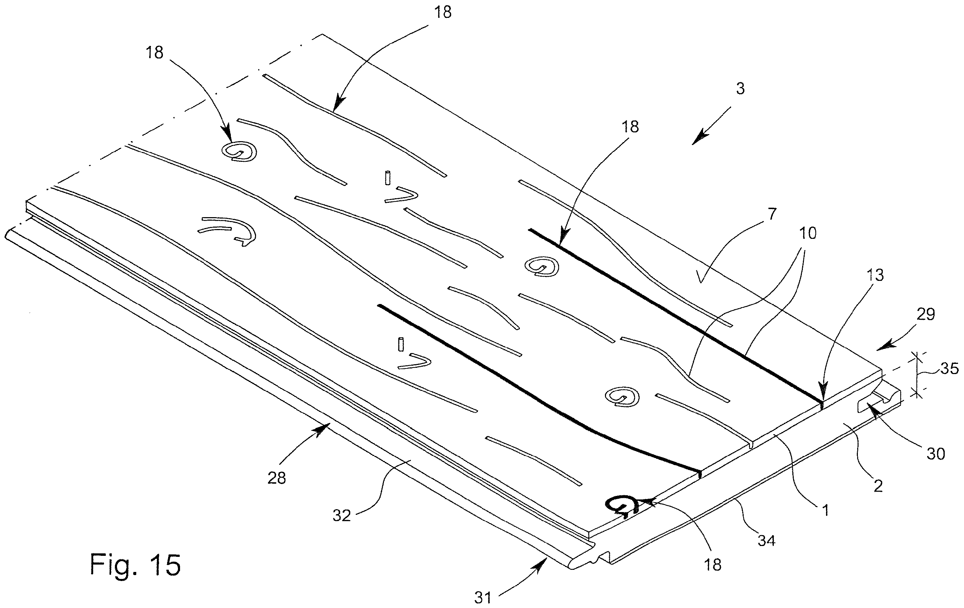

In Fig. 15 ist schematisch dargestellt, dass unter einer dekorsynchronen Prägung der Struktur 10 zu verstehen ist, dass sich die geprägte Struktur 10 letztlich zumindest im Wesentlichen an dem Dekor 6 orientiert und insbesondere zumindest im Wesentlichen zu dem Dekor 6 synchron ausgebildet ist - d.h. beispielsweise, dass zumindest einige Elemente 18 des Dekors 6 zu der Struktur 10 derart korrespondieren, dass eine als Element 18 dargestellte Vertiefung zu einer tatsächlichen Vertiefung 13 an der Oberseite 11 des Schichtenverbundes 9 zumindest im Wesentlichen korrespondiert. Geringe Abweichungen aufgrund des Herstellungsverfahrens können dabei auftreten und beispielsweise maximal 2 mm +/- 1 mm betragen.

Insbesondere können dargestellte Risse, Äste oder dgl. des Dekors 6 zu entsprechenden Vertiefungen 13 korrespondieren. In diesem Zusammenhang versteht es sich, dass auch weitere Elemente 18 des Dekors 6 vorhanden sein können, die nicht zu der Struktur 10 korrespondieren. Letztlich ist unter einer dekorsynchronen Prägung zu verstehen, dass mehrere Elemente 18 des Dekors 6 oder auch einzelne Teilbereiche zu der Struktur 10 synchron ausgebildet sind - selbst wenn weitere Elemente 18 oder weitere Teilbereiche des Dekor 6 eine asynchrone Struktur 10 aufweisen.

Die Erhöhung 14 an der Unterseite 12 ist derart ausgebildet, dass bei der späteren Applikation bzw. dem späteren Verbinden, insbesondere dem Kaschieren, der Deckschicht 1 auf die Trägerplatte 2 weiterhin eine gute Haftung bzw. Haftfähigkeit gewährleistet werden kann. So kann sich die Struktur 10 also auf der Unterseite 12 abzeichnen, jedoch wird die Haftfähigkeit der gesamten Deckschicht 1 weiterhin sichergestellt.

Fig. 2 zeigt, dass das Aufbringen der Oberflächenversiegelungsschicht 17 im Verfahrensschritt E auch vor dem Prägeschritt D erfolgen kann. Die Härtung im Verfahrensschritt F der Oberflächenversiegelungsschicht 17 kann dabei vor oder nach der Prägung im Schritt D erfolgen. Fig. 2 zeigt, dass die Härtung F nach der Prägung D erfolgt. Die Prozessschritte A bis C werden bevorzugt weiterhin nacheinander durchgeführt, wie der Vergleich der Fig. 1 mit der Fig. 2 deutlich macht.

Fig. 3 zeigt, dass die Oberflächenversiegelungsschicht 17 im Verfahrensschritt F vor der Prägung im Verfahrensschritt D erfolgt. Somit kann das Härten im Verfahrensschritt F zwar nach dem Aufbringen der Oberflächenversiegelungsschicht 17 im Verfahrensschritt E - jedoch vor oder nach dem Prägen im Verfahrensschritt D - erfolgen.

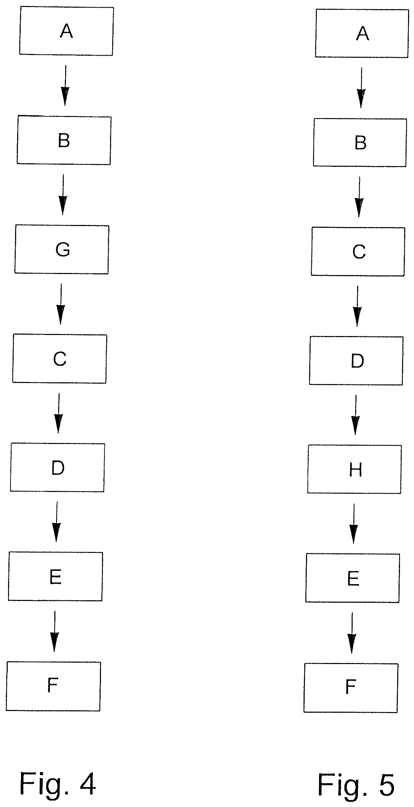

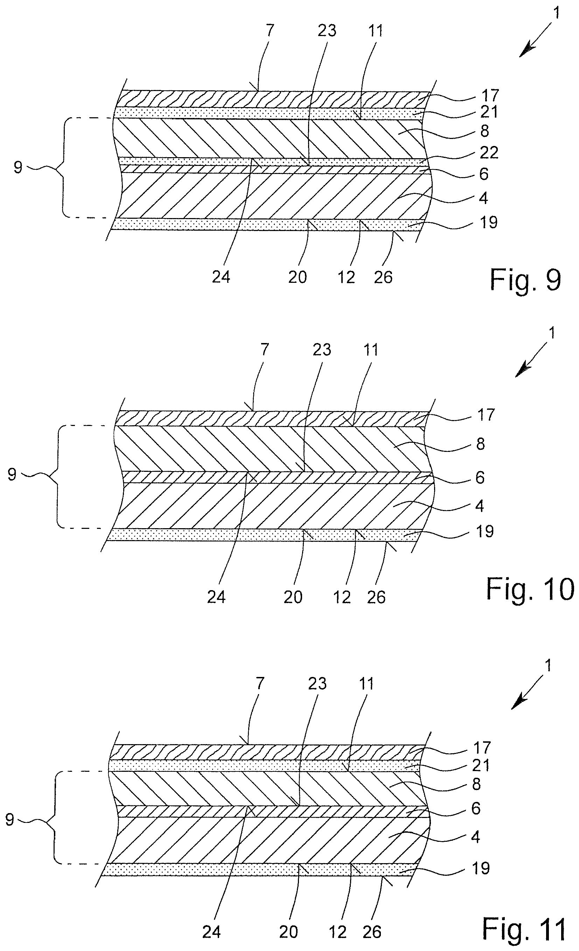

Fig. 4 zeigt, dass ein weiterer Prozessschritt bzw. Verfahrensschritt G vorgesehen ist, der im dargestellten Ausführungsbeispiel vor dem Verfahrensschritt C (nämlich der Verbindung der Nutzschicht 8 und der Basisschicht 4 zur Bildung eines Schichtenverbundes 9) durchgeführt wird. Im Prozessschritt G wird eine erste Haftvermittlerschicht 19 unterseitig auf die Basisschicht 4 - also auf die Unterseite 20 der Basisschicht 4 - aufgebracht. Die erste Haftvermittlerschicht 19 ist schematisch in der Fig. 9 dargestellt. Der Verfahrensschritt G kann auch nach den Verfahrensschritten C, D, E und/oder F, insbesondere nach Durchführung des Verfahrensschrittes F, erfolgen bzw. durchgeführt werden.

Grundsätzlich kann auch vorgesehen sein, dass der Verfahrensschritt G zumindest im Wesentlichen zeitgleich mit dem Verfahrensschritt B durchgeführt werden kann.

Fig. 5 zeigt die Integration des Verfahrensschrittes H in den schematischen Verfahrensablauf. Der Verfahrensschritt H kann zusätzlich oder alternativ zu dem Verfahrensschritt G durchgeführt werden. In dem Verfahrensschritt H ist vorgesehen, dass eine weitere Haftvermittlerschicht 21, wie sie schematisch in Fig. 9 dargestellt ist, zumindest bereichsweise nach Bildung des Schichtenverbundes 9 (vgl. Verfahrensschritt C) und vor dem Aufbringen der Oberflächenversiegelungsschicht 17 (vgl. Verfahrensschritt E) auf der der Basisschicht 4 abgewandten Oberseite 11 der Nutzschicht 8 aufgebracht wird. Die weitere Haftvermittlerschicht 21 kann demgemäß zwischen der Nutzschicht 8 und der Oberflächenversiegelungsschicht 17 angeordnet sein, wobei die Oberflächenversiegelungsschicht 17 auf die weitere Haftvermittlerschicht 21 aufgebracht sein kann.

Letztlich dient die weitere Haftvermittlerschicht 21 zur Verbesserung der Verklebung bzw. Verbindung der Oberflächenversiegelungsschicht 17 mit der Nutzschicht 8.

Sowohl die erste Haftvermittlerschicht 19 und/oder die weitere Haftvermittlerschicht 21 können einen Primer aufweisen oder daraus bestehen.

Der Verfahrensschritt H kann darüber hinaus vor oder nach dem Prägen im Schritt D durchgeführt werden. Fig. 5 zeigt, dass der Verfahrensschritt H nach der Prägung des Schichtenverbundes 9 mit der Struktur 10 durchgeführt wird.

Nicht dargestellt ist, dass im Schritt C zur Verbindung der Basisschicht 4 mit der Nutzschicht 8 ein Kaschierprozess genutzt wird, wobei die Nutzschicht 8 mit der Basisschicht 4 durch Druck und/oder Wärme verbunden wird. Ein solches Verfahren kann auch als Thermokaschieren bezeichnet werden.

In Fig. 8 ist schematisch dargestellt, dass zur Kaschierung im Schritt C ein Kaschiermittel 22 verwendet wird. Das Kaschiermittel 22 kann letztlich auch eine Schicht ausbilden, die zumindest bereichsweise, vorzugsweise vollflächig, auf der Oberseite 5 der Basisschicht 4 bzw. auf der Oberseite 23 des Dekors 6 angeordnet ist. Als Kaschiermittel 22 kann ein Klebstoff verwendet werden, insbesondere ein Lack, Leim und/oder Harz.

Das Kaschiermittel 22 kann vor dem Kaschieren (im Verfahrensschritt C) auf die der Nutzseite 7 abgewandten Unterseite 24 der Nutzschicht 8 und/oder auf der Oberseite 5 der Basisschicht 4 bzw. der Oberseite 23 des Dekors 6 zumindest bereichsweise aufgetragen werden. In diesem Zusammenhang versteht es sich, dass unter der Oberseite 5 der Basisschicht 4 auch die Oberseite 23 des Dekors 6 verstanden werden kann. Vorzugsweise ist ein zumindest im Wesentlichen vollflächiger Auftrag des Kaschiermittels 22 vorgesehen.

Bei einer alternativen, nicht dargestellten Ausführungsform kann vorgesehen sein, dass die Nutzschicht 8 mit der Basisschicht 4 zum Bilden des Schichtenverbundes 9 im Verfahrensschritt C mittels Laminieren verbunden wird. Beim Laminieren kann insbesondere auf die Verwendung eines Kaschiermittels 22 bzw. eines weiteren Hilfsstoffes zur Verklebung verzichtet werden.

Darüber hinaus ist nicht dargestellt, dass im Verfahrensschritt D das Prägen der Struktur 10 mittels eines Strukturzylinders durchgeführt wird, wobei der Zylinder auf der Oberfläche der Deckschicht 1 abrollen kann und dabei die Struktur 10 in die Deckschicht 1 bzw. den Schichtenverbund 9 eindrückt bzw. einprägt.

Nicht dargestellt ist, dass das Dekor 6 auf die Basisschicht 4 mittels eines Druckzylinders und/oder mittels Druckköpfen in einem Digitaldruckverfahren aufgebracht werden kann.

Der Schichtenverbund 9 kann demgemäß beim Prägen geprägt und/oder erwärmt werden, vorzugsweise mittels Druck und/oder Wärme.

Ferner ist nicht dargestellt, dass das Dekor 6 auf die Basisschicht 4 mit Offset-Druck, Flexo-Druck, Digitaldruck, Tiefdruck und/oder Siebdruck bedruckt wird.

Alternativ oder zusätzlich kann auch vorgesehen sein, dass der Druck des Dekors 6 aus mehreren einzelnen Bildlagen aufgebaut wird, insbesondere wobei die Bedruckung durch ein Rotationstiefdruckverfahren erfolgt. Auch diese Ausführungsform ist nicht näher dargestellt.

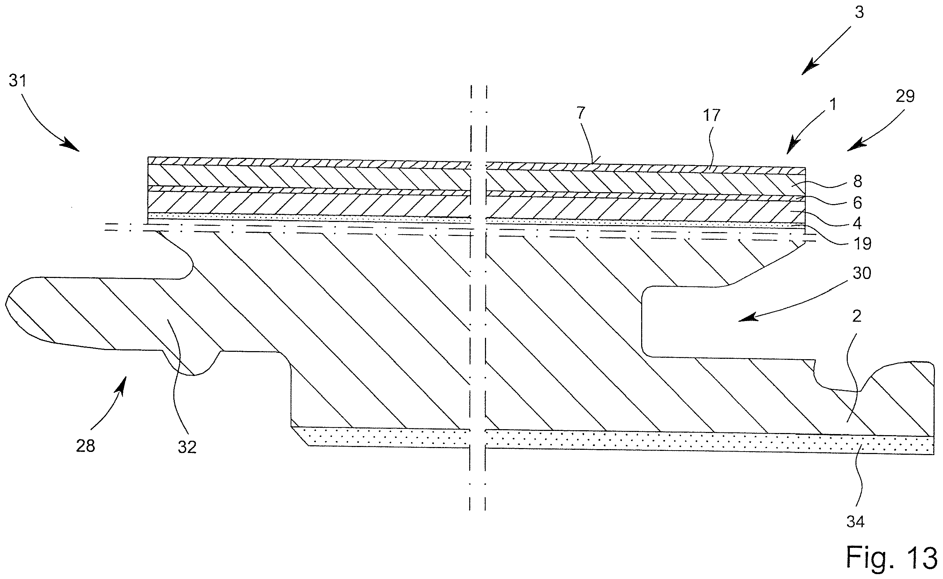

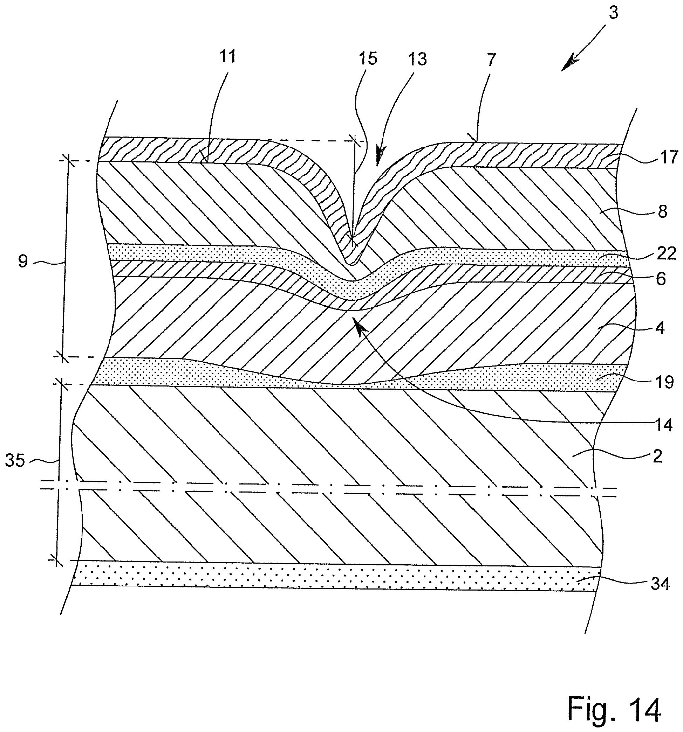

Fig. 6 zeigt eine Polyvinylchlorid-freie Deckschicht 1. Die Deckschicht 1 ist zur Verbindung, bevorzugt zur Kaschierung, mit einer Trägerplatte 2 eines Belagselementes 2 vorgesehen, wie sich dies schematisch aus den Fig. 13 bis Fig. 15 ergibt. Die Deckschicht 1 kann nach einem Verfahren gemäß einem der vorhergehenden Ausführungsformen hergestellt worden sein.

Die in Fig. 7 dargestellte Deckschicht 1 weist eine mit einem Dekor 6 bedruckte Basisschicht 4 und eine Nutzschicht 8 auf. Die Basisschicht 4 und die Nutzschicht 8 sind fest miteinander - zumindest bereichsweise - zu einem Schichtenverbund 9 verbunden. Der Schichtenverbund 9 kann zumindest bereichsweise mit einer mit dem Dekor 6 zumindest im Wesentlichen synchronen Struktur 10 geprägt sein.

Was unter einer dekorsynchronen Struktur 10 zu verstehen ist, ist bereits erläutert worden.

Letztlich stimmen zumindest im Wesentlichen und zumindest bereichsweise einige Elemente 18 des Dekors 6 mit entsprechenden Vertiefungen 13 des Schichtenverbundes 9 überein. Bevorzugt ist eine vollflächige dekorsynchrone Ausbildung der Struktur 10 vorgesehen.

Aus Fig. 12 geht schematisch hervor, dass sich die Struktur 10 bzw. die Vertiefung 13 an der Oberseite 11 des Schichtenverbundes 9 sowohl auf der Oberseite 11 als auch zumindest bereichsweise auf der Unterseite 12 des Schichtenverbundes 9 abzeichnet. Dabei kann die Tiefe 15 der Vertiefung 13 größer ausgebildet sein als die Höhe 16 der an der Unterseite zu der Vertiefung 13 korrespondierenden Erhöhung 14. Letztlich muss auch nicht jede Vertiefung 13 eine Erhöhung 14 an der Unterseite 12 ausbilden. Insbesondere ist zumindest für einige Vertiefungen 13 vorgesehen, dass entsprechende Erhöhungen 14 an der Unterseite ausgebildet werden können.

In Fig. 12 ist die Tiefe 15 schematisch eingezeichnet bzw. dargestellt. Nicht dargestellt ist, dass die maximale Tiefe 15 der Struktur 10 bis zu 1 mm, bevorzugt zwischen 0,05 mm bis 0,2 mm, beträgt.

Der in Fig. 12 gezeigte Schichtaufbau weist eine gehärtete Oberflächenversiegelungsschicht 17, bevorzugt ausgebildet als Lackschicht, auf der Oberseite 11 des Schichtenverbundes 9 auf.

Ebenfalls ist nicht dargestellt, dass die Struktur 10 auf der Unterseite 12 des Schichtenverbundes 9 und/oder der Deckschicht 1 eine maximale Höhe bzw. die Erhöhungen 14 an der Unterseite 12 eine maximale Höhe 16 von höchstens 100 µm aufweist/aufweisen.

Die in Fig. 6 dargestellte Deckschicht 1 weist eine Dicke 25 von wenigstens 0,1 mm, insbesondere zwischen 0,2 mm bis 0,3 mm, auf.

Nicht dargestellt ist, dass die Basisschicht 4 als Basisfilm und/oder als Basisfolie ausgebildet ist.

Darüber hinaus geht aus den dargestellten Ausführungsformen nicht hervor, dass bevorzugt die Basisschicht 4 und/oder die Nutzschicht 8 als Polyvinylchlorid-freies Material einen thermoplastischen Kunststoff, vorzugsweise Polypropylen, Polyethylen und/oder Polyurethan, aufweist und/oder daraus besteht.

In Fig. 15 ist ein Belagselement 3 gezeigt. Das Belagselement 3 kann zur Verwendung als Boden-, Wand- und/oder Deckenbelagselement für einen Boden-, Wand- und/oder Deckenbelag vorgesehen sein. Das Belagselement 3 umfasst eine Trägerplatte 2 und eine Deckschicht 1 nach einem der vorhergehenden Ausführungsformen. Die einer Nutzseite 7 abgewandte Unterseite 26 der Deckschicht 1 ist fest mit der der Nutzseite 7 zugewandten Oberseite 27 der Trägerplatte 2 verbunden, vorzugsweise vollflächig verbunden.

Es kann in weiteren Ausführungsformen auch vorgesehen sein, dass die Unterseite 26 zumindest bereichsweise mit der Oberseite 27 verbunden ist.

Bevorzugt ist die Deckschicht 1 auf die Oberseite 27 der Trägerplatte 2 aufkaschiert worden.

Fig. 13 zeigt, dass an gegenüberliegenden Seiten der Trägerplatte 2 korrespondierende Nut-Feder-Verbindungsgeometrien 28, insbesondere zur Ausbildung einer Klickverbindung, vorgesehen sind. Die Nut-Feder-Verbindungsgeometrien 28 weisen eine Nutseite 29 mit einer Nut 30 und eine Federseite 31 mit einer Feder 32 auf. Die Nutseite 29 liegt der Federseite 31 gegenüber.

Fig. 15 zeigt, dass gegenüberliegende Seiten der Längsseiten als korrespondierende Nut- und Federseiten 29, 30 ausgebildet sind.

Nicht dargestellt ist, dass gegenüberliegende Seiten der Querseiten als korrespondierende Nut- und Federseiten 29, 30 ausgebildet sind.

Nicht dargestellt ist, dass gegenüberliegende Seiten der Trägerplatte 2 korrespondierende Druckknopf- und/oder Bjonettverbindungsgeometrien aufweisen.

Fig. 13 zeigt weiter, dass an der Unterseite 33 der Trägerplatte 2 ein Gegenzug 34 angeordnet ist. In weiteren Ausführungsformen kann der Gegenzug 34 ein Kraftpapier, eine Korkschicht und/oder expandiertes Polyolefin (XPO) aufweisen.

Die in Fig. 13 dargestellte Trägerplatte 2 ist eine HDF-Platte. Nicht dargestellt ist, dass die Trägerplatte 2 in weiteren Ausführungsformen eine Echtholzschicht und/oder eine MDF-Platte sein kann.

Darüber hinaus ist nicht dargestellt, dass die Trägerplatte 2 einen Kunststoff als Material aufweist und/oder daraus besteht, bevorzugt Polypropylen und/oder Polyethylen. Ganz besonders bevorzugt ist, dass die Trägerplatte 2 ebenfalls Polyvinylchlorid-frei ausgebildet ist.

Die in Fig. 13 dargestellte Trägerplatte 2 weist eine Schichtdicke 35 von wenigstens 2 mm auf.

### Bezugszeichenliste:

- 1: Deckschicht
- 2: Trägerplatte
- 3: Belagselement
- 4: Basisschicht
- 5: Oberseite von 4
- 6: Dekor
- 7: Nutzseite
- 8: Nutzschicht
- 9: Schichtenverbund
- 10: Struktur
- 11: Oberseite von 9
- 12: Unterseite von 9
- 13: Vertiefungen
- 14: Erhöhungen
- 15: Tiefe von 13
- 16: Höhe von 14
- 17: Oberflächenversiegelungsschicht
- 18: Elemente von 6
- 19: erste Haftvermittlerschicht
- 20: Unterseite von 4
- 21: weitere Haftvermittlerschicht
- 22: Kaschiermittel
- 23: Oberseite von 6
- 24: Unterseite von 8
- 25: Dicke von 1
- 26: Unterseite von 1
- 27: Oberseite von 2
- 28: Nut-Feder-Verbindungsgemoetrie
- 29: Nutseite
- 30: Nut
- 31: Federseite
- 32: Feder
- 33: Unterseite von 2
- 34: Gegenzug
- 35: Schichtdicke von 2

## Patentansprüche

1. Verfahren zur Herstellung einer Polyvinylchlorid-freien Deckschicht (1) für ein Belagselement (3), wobei das Verfahren die nachfolgend angebenden Verfahrensschritte umfasst:
A) Bereitstellen einer Kunststoff aufweisenden und/oder daraus bestehenden Basisschicht (4);
B) Bedrucken einer einer Nutzseite (7) zugewandten Oberseite (5) der Basisschicht (4) mit einem Dekor (6);
C) Verbinden, nämlich Kaschieren durch Druck und/oder Wärme, einer, vorzugsweise transparenten, Nutzschicht (8) mit der bedruckten Basisschicht (4) zur Bildung eines, bevorzugt festen, Schichtenverbundes (9);
D) Prägen des Schichtenverbundes (9) zumindest bereichsweise, vorzugsweise vollflächig, mit einer mit dem Dekor (6) zumindest im Wesentlichen synchronen Struktur (10), wobei die Struktur (10) so geprägt wird, dass sie sich sowohl auf der der Nutzseite (7) zugewandten Oberseite (11) als auch zumindest bereichsweise auf der der Nutzseite (7) abgewandten Unterseite (12) des Schichtenverbundes (9) abzeichnet;
E) Aufbringen einer Oberflächenversiegelungsschicht (17), bevorzugt einer Lackschicht, auf die der Nutzseite (7) zugewandten Oberseite (11) des Schichtenverbundes (9);
F) optional: Härten der Oberflächenversiegelungsschicht (17), bevorzugt der Lackschicht.

2. Verfahren nach Anspruch 1, **dadurch gekennzeichnet, dass** das Aufbringen der Oberflächenversiegelungsschicht (17), bevorzugt der Lackschicht, vor oder nach dem Prägen des Schichtenverbundes (9) erfolgt und/oder
dass das Härten der Oberflächenversiegelungsschicht (17), bevorzugt der Lackschicht, vor oder nach dem Prägen des Schichtenverbundes (9) erfolgt und/oder
dass das Härten der Oberflächenversiegelungsschicht (17), bevorzugt der Lackschicht, mittels Elektronenstrahlhärten durchgeführt wird.

3. Verfahren nach Anspruch 1 oder 2, **dadurch gekennzeichnet, dass** eine erste Haftvermittelschicht (19) unterseitig auf die Basisschicht (4) aufgebracht wird und/oder dass eine weitere Haftvermittelschicht (21) zumindest bereichsweise nach Bildung des Schichtenverbundes (9) und vor dem Aufbringen der Oberflächenversiegelungsschicht (17), bevorzugt der Lackschicht, auf der der Basisschicht (4) abgewandten Oberseite (5) der Nutzschicht (8) aufgebracht wird, insbesondere wobei die Oberflächenversiegelungsschicht (17), bevorzugt die Lackschicht, auf die weitere Haftvermittlerschicht (21) aufgebracht wird.

4. Verfahren nach einem der vorhergehenden Ansprüche, **dadurch gekennzeichnet,**
**dass** beim Kaschieren ein Kaschiermittel (22) zur Verbindung der Nutzschicht (8) mit der Basisschicht (4) genutzt wird, insbesondere wobei als Kaschiermittel (22) Lack, Leim und/oder Harz verwendet wird und/oder insbesondere wobei das Kaschiermittel (22) vor dem Kaschieren auf die der Nutzseite (7) abgewandte Unterseite (24) der Nutzschicht (8) und/oder auf der Oberseite (5) der Basisschicht (4) zumindest bereichsweise aufgetragen wird.

5. Verfahren nach einem der vorhergehenden Ansprüche, **dadurch gekennzeichnet, dass** das Prägen des Schichtenverbundes (9) mittels eines Strukturzylinders erfolgt, insbesondere wobei der Schichtenverbund (9) zum Prägen geprägt und/oder erwärmt wird, und/oder
dass das Dekor (6) auf die Basisschicht (4) mittels Offset-Druck, Flexodruck, Rotationstiefdruckverfahren, Digitaldruck, Tiefdruck und/oder Siebdruck bedruckt wird.

6. Polyvinylchlorid-freie Deckschicht (1) vorgesehen zur Verbindung, bevorzugt zur Kaschierung, mit einer Trägerplatte (2) eines Belagselements (3), insbesondere wobei die Deckschicht (1) nach einem Verfahren nach einem der Ansprüche 1 bis 5 hergestellt worden ist, wobei die Deckschicht (1) eine mit einem Dekor (6) bedruckte Basisschicht (4) und eine Nutzschicht (8) aufweist, wobei die Basisschicht (4) und die Nutzschicht (8) fest miteinander zu einem Schichtenverbund (9) verbunden sind, wobei der Schichtenverbund (9) zumindest bereichsweise mit einer mit dem Dekor (6) zumindest im Wesentlichen synchronen Struktur (10) geprägt ist, wobei die Struktur (10) sich sowohl auf der Oberseite (11) als auch zumindest bereichsweise auf der Unterseite (12) des Schichtenverbundes (9) abzeichnet, wobei eine gehärtete Oberflächenversiegelungsschicht (17), bevorzugt eine Lackschicht, auf der Oberseite (11) des Schichtenverbundes (9) vorgesehen ist.

7. Deckschicht nach Anspruch 6, **dadurch gekennzeichnet, dass** die Struktur (10), bevorzugt auf der Oberseite (11) des Schichtenverbundes (9) und/oder der Deckschicht (1), eine maximale Tiefe (15) von bis zu 1 mm, bevorzugt bis zu 0,5 mm, weiter bevorzugt zwischen 0,05 mm bis 0,2 mm, aufweist und/oder
dass die Struktur (10) auf der Unterseite (12) des Schichtenverbundes (9) und/oder der Deckschicht (1) eine maximale Höhe (16) von höchstens 100 µm, bevorzugt höchstens 90 µm, weiter bevorzugt zwischen 30 µm bis 90 µm, aufweist und/oder
dass die Deckschicht (1) eine Dicke (25) von wenigstens 0,1 mm, bevorzugt zwischen 0,1 und 0,4 mm, weiter bevorzugt zwischen 0,2 bis 0,3 mm, aufweist.

8. Deckschicht nach Anspruch 6 oder 7, **dadurch gekennzeichnet, dass** die Basisschicht (4) als Basisfilm und/oder Basisfolie ausgebildet ist und/oder
dass die Basisschicht (4) und/oder die Nutzschicht (8) als Polyvinylchlorid-freies Material einen thermoplastischen Kunststoff aufweist und/oder daraus besteht, insbesondere Polypropylen, Polyethylen und/oder Polyurethan.

9. Belagselement (3), insbesondere vorgesehen zur Verwendung als Boden-, Wand- und/oder Deckenbelagselement für einen Boden-, Wand- und/oder Deckenbelag, mit wenigstens einer Trägerplatte (2) und wenigstens einer Deckschicht (1) nach einem der vorhergehenden Ansprüche 6 bis 8, wobei die einer Nutzseite (7) abgewandte Unterseite (26) der Deckschicht (1) fest mit der der Nutzseite (7) zugewandten Oberseite (27) der Trägerplatte (2) verbunden ist.

10. Belagselement gemäß Anspruch 9, **dadurch gekennzeichnet, dass** an gegenüberliegenden Seiten der Trägerplatte (2) korrespondierende Nut-Feder-Verbindungsgeometrien (28), insbesondere zur Ausbildung einer Klickverbindung, mit einer eine Nut (30) aufweisenden Nutseiten (29) und einer der Nutseite (29) gegenüberliegenden, eine Feder (32) aufweisenden Federseite (31) vorgesehen sind und/oder
dass an gegenüberliegenden Seiten der Trägerplatte (2) korrespondierende Druccknopf- und/oder Bajonettverbindungsgeometrien vorgesehen sind und/oder
dass der Unterseite (33) der Trägerplatte (2) zugewandt ein Gegenzug (34), insbesondere ein Kraftpapier und/oder eine Korkschicht und/oder ein expandiertes Polyolefin (XPO) aufweisender Gegenzug (34), angeordnet ist und/oder
dass die Trägerplatte (2) als eine HDF-Platte (Hochdichte Faserplatte), eine Echtholzschicht und/oder eine MDF-Platte (Mitteldichte Holzfaserplatte) ausgebildet ist und/oder dass die Trägerplatte (2) einen Kunststoff als Material aufweist und/oder daraus bestehet, bevorzugt Polypropylen und/oder Polyethylen und/oder dass die Trägerplatte (2) Polyvinylchlorid-frei ausgebildet ist und/oder
dass die Trägerplatte (2) eine Schichtdicke (35) von wenigstens 2 mm, bevorzugt zwischen 3 bis 10 mm, weiter bevorzugt zwischen 4 bis 7 mm, aufweist.

## Claims

1. A method of producing a polyvinyl chloride-free top layer (1) for a decking element (3), the method comprising the method steps indicated below:
A) Providing a base layer (4) comprising and/or consisting of plastic;
B) Printing a décor (6) on a top side (5) of the base layer (4) facing a usable side (7);
C) Bonding, namely laminating by pressure and/or heat, a, preferably transparent, wearing surface (8) to the printed base layer (4) to form a, preferably solid, layer composite (9);
D) Embossing the layer composite (9) at least in some areas, preferably over the entire surface, with a structure (10) at least substantially synchronous with the décor (6), the structure (10) being embossed in such a way that it is visible both on the top side (11) facing the usable side (7) and at least in some areas on the bottom side (12) of the layer composite (9) facing away from the usable side (7);
E) Application of a surface sealing layer (17), preferably a lacquer layer, to the top side (11) of the layer composite (9) facing the usable side (7);
F) optionally: curing of the surface sealing layer (17), preferably the lacquer layer.

2. Method according to claim 1, **characterized in that** the application of the surface sealing layer (17), preferably the lacquer layer, takes place before or after the embossing of the layer composite (9) and/or
**in that** the curing of the surface sealing layer (17), preferably the lacquer layer, takes place before or after the embossing of the layer composite (9) and/or
**in that** the curing of the surface sealing layer (17), preferably the lacquer layer, is carried out by means of electron beam curing.

3. Method according to claim 1 or 2, **characterized in that** a first adhesion promoter layer (19) is applied to the bottom side of the base layer (4) and/or **in that** another adhesion promoter layer (21) is applied at least in regions after formation of the layer composite (9) and before application of the surface sealing layer (17), preferably the lacquer layer, is applied to the top side (5) of the wearing surface (8) facing away from the base layer (4), in particular wherein the surface sealing layer (17), preferably the lacquer layer, is applied to the other adhesion promoter layer (21).

4. Method according to one of the preceding claims, **characterized in that** during lamination, a laminating agent (22) is used to bond the wearing surface (8) to the base layer (4), in particular lacquer, glue and/or resin being used as the laminating agent (22) and/or, in particular, the laminating agent (22) being applied, at least in regions, to the bottom side (24) of the wearing surface (8) facing away from the usable side (7) and/or to the top side (5) of the base layer (4) before lamination.

5. Method according to one of the preceding claims, **characterized in that** the embossing of the layer composite (9) is carried out by means of a structural cylinder, in particular wherein the layer composite (9) is embossed and/or heated for embossing, and/or
**in that** the décor (6) is printed onto the base layer (4) by means of offset printing, flexographic printing, rotogravure printing, digital printing, gravure printing and/or screen printing.

6. Polyvinyl chloride-free top layer (1) provided for connection, preferably for lamination, to a carrier plate (2) of a decking element (3), in particular wherein the top layer (1) has been produced by a method according to one of claims 1 to 5, wherein the top layer (1) has a base layer (4) printed with a décor (6) and a wearing surface (8), wherein the base layer (4) and the wearing surface (8) are firmly connected to one another to form a layer composite (9), wherein the layer composite (9) is embossed at least in regions with a structure (10) at least substantially synchronous with the décor (6), wherein the structure (10) is apparent both on the top side (11) and at least in regions on the bottom side (12) of the layer composite (9), wherein a hardened surface sealing layer (17), preferably a lacquer layer, is provided on the top side (11) of the layer composite (9).

7. Top layer according to claim 6, **characterized in that** the structure (10), preferably on the top side (11) of the layer composite (9) and/or the top layer (1), has a maximum depth (15) of up to 1 mm, preferably up to 0.5 mm, more preferably between 0.05 mm to 0.2 mm, and/or
**in that** the structure (10) on the bottom side (12) of the layer composite (9) and/or of the top layer (1) has a maximum height (16) of at most 100 µm, preferably at most 90 µm, further preferably between 30 µm to 90 µm, and/or
that the top layer (1) has a thickness (25) of at least 0.1 mm, preferably between 0.1 and 0.4 mm, more preferably between 0.2 and 0.3 mm.

8. Top layer according to claim 6 or 7, **characterized in that** the base layer (4) is formed as a base film and/or base foil and/or
**in that** the base layer (4) and/or the wearing surface (8) has as polyvinyl chloride-free material a thermoplastic and/or consists thereof, in particular polypropylene, polyethylene and/or polyurethane.

9. Decking element (3), in particular intended for use as a floor, wall and/or ceiling covering element for a floor, wall and/or ceiling covering, having at least one carrier plate (2) and at least one top layer (1) according to one of the preceding claims 6 to 8, the bottom side (26) of the top layer (1) facing away from a usable side (7) being firmly connected to the top side (27) of the carrier plate (2) facing the usable side (7).

10. Decking element according to claim 9, **characterized in that** corresponding tongue and groove connection geometries (28), in particular for forming a click connection, with a groove side (29) having a groove (30) and a tongue side (31) having a tongue (32) and located opposite the groove side (29) are provided on opposite sides of the carrier plate (2) and/or
**in that** corresponding snap fastener and/or bayonet connection geometries are provided on opposite sides of the carrier plate (2) and/or
**in that** a countermove (34), in particular a countermove (34) comprising kraft paper and/or a cork layer and/or an expanded polyolefin (XPO), is arranged facing the bottom (33) of the carrier plate (2), and/or
**in that** the carrier plate (2) is designed as a HDF plate (high-density fiberboard), a real wood layer and/or a MDF plate (medium-density fiberboard) and/or **in that** the carrier plate (2) has a plastic as material and/or consists thereof, preferably polypropylene and/or polyethylene and/or **in that** the carrier plate (2) is designed to be free of polyvinyl chloride and/or
that the carrier plate (2) has a layer thickness (35) of at least 2 mm, preferably between 3 to 10 mm, more preferably between 4 to 7 mm.

## Revendications

1. Procédé de fabrication d'une couche de revêtement (1) exempte de chlorure de polyvinyle pour un élément de revêtement (3), le procédé comprenant les étapes de procédé indiquées ci-après:
A) Préparation d'une couche de base (4) présentant une matière plastique et/ou constituée d'une telle matière;
B) impression d'un décor (6) sur une face supérieure (5) de la couche de base (4) orientée vers une face utile (7);
C) l'assemblage, à savoir le contrecollage par pression et/ou chaleur, d'une couche utile (8), de préférence transparente, avec la couche de base (4) imprimée pour former un assemblage de couches (9), de préférence solide;
D) estampage du assemblage de couches (9) au moins par zones, de préférence sur toute sa surface, avec une structure (10) au moins sensiblement synchrone avec le décor (6), la structure (10) étant estampée de telle sorte qu'elle se dessine aussi bien sur la face supérieure (11) tournée vers la face utile (7) que, au moins par zones, sur la face inférieure (12) du assemblage de couches (9) opposée à la face utile (7);
E) application d'une couche de scellement de surface (17), de préférence une couche de vernis, sur la face supérieure (11) du assemblage de couches (9) tournée vers la face utile (7);
F) facultativement, durcir la couche de scellement de surface (17), de préférence la couche de vernis.

2. Procédé selon la revendication 1, **caractérisé en ce que** l'application de la couche de scellement de surface (17), de préférence de la couche de vernis, a lieu avant ou après l'estampage de l'assemblage de couches (9) et/ou
**en ce que** le durcissement de la couche de scellement de surface (17), de préférence de la couche de vernis, a lieu avant ou après l'estampage de l'assemblage de couches (9) et/ou
**en ce que** le durcissement de la couche de scellement de surface (17), de préférence de la couche de vernis, est effectué au moyen d'un durcissement par faisceau d'électrons.

3. Procédé selon la revendication 1 ou 2, **caractérisé en ce qu'**une première couche d'agent adhésif (19) est appliquée sur la face inférieure de la couche de base (4) et/ou **en ce qu'**une autre couche d'agent adhésif (21) est appliquée au moins par zones après la formation de l'assemblage de couches (9) et avant l'application de la couche de scellement de surface (17), de préférence la couche de vernis, est appliquée sur la face supérieure (5) de la couche utile (8) opposée à la couche de base (4), en particulier la couche de scellement de surface (17), de préférence la couche de vernis, étant appliquée sur l'autre couche d'agent adhésif (21).

4. Procédé selon l'une des revendications précédentes, **caractérisé en ce que** lors du contrecollage, on utilise un agent de contrecollage (22) pour relier la couche utile (8) à la couche de base (4), en particulier en utilisant comme agent de contrecollage (22) du vernis, de la colle et/ou de la résine et/ou en particulier en appliquant l'agent de contrecollage (22) avant le contrecollage sur la face inférieure (24) de la couche utile (8) opposée à la face utile (7) et/ou sur la face supérieure (5) de la couche de base (4) au moins par zones..

5. Procédé selon l'une des revendications précédentes, **caractérisé en ce que** l'estampage de l'assemblage de couches (9) est effectué au moyen d'un cylindre de structure, en particulier l'assemblage de couches (9) étant estampé et/ou chauffé pour l'estampage, et/ou
**en ce que** le décor (6) est imprimé sur la couche de base (4) au moyen d'une impression offset, d'une flexographie, d'un procédé d'héliogravure rotative, d'une impression numérique, d'une impression en creux et/ou d'une sérigraphie.

6. Couche de recouvrement (1) exempte de chlorure de polyvinyle, prévue pour être reliée, de préférence pour être contrecollée, à une plaque de support (2) d'un élément de revêtement (3), en particulier la couche de recouvrement (1) ayant été fabriquée selon un procédé selon l'une des revendications 1 à 5, la couche de recouvrement (1) présentant une couche de base (4) imprimée avec un décor (6) et une couche utile (8), la couche de base (4) et la couche utile (8) étant reliées solidement l'une à l'autre pour former un assemblage de couches (9), l'assemblage de couches (9) étant estampé au moins par zones avec une structure (10) au moins sensiblement synchrone avec le décor (6), la structure (10) se dessinant aussi bien sur la face supérieure (11) qu'au moins par zones sur la face inférieure (12) du composite de couches (9), une couche de scellement de surface durcie (17), de préférence une couche de vernis, étant prévue sur la face supérieure (11) du composite de couches (9).

7. Couche de recouvrement selon la revendication 6, **caractérisée en ce que** la structure (10), de préférence sur la face supérieure (11) de l'assemblage de couches (9) et/ou de la couche de recouvrement (1), présente une profondeur maximale (15) allant jusqu'à 1 mm, de préférence jusqu'à 0,5 mm, plus préférablement entre 0,05 mm et 0,2 mm, et/ou
**en ce que** la structure (10) sur la face inférieure (12) de l'assemblage de couches (9) et/ou de la couche de recouvrement (1) présente une hauteur maximale (16) de 100 µm au maximum, de préférence de 90 µm au maximum, de préférence encore entre 30 µm et 90 µm, et/ou
**en ce que** la couche de recouvrement (1) présente une épaisseur (25) d'au moins 0,1 mm, de préférence entre 0,1 et 0,4 mm, plus préférablement entre 0,2 et 0,3 mm.

8. Couche de couverture selon la revendication 6 ou 7, **caractérisée en ce que** la couche de base (4) est réalisée sous la forme d'un film de base et/ou d'une feuille de base, et/ou
**en ce que** la couche de base (4) et/ou la couche utile (8) présente et/ou est constituée, en tant que matériau exempt de chlorure de polyvinyle, d'une matière thermoplastique, en particulier de polypropylène, de polyéthylène et/ou de polyuréthane.

9. Élément de revêtement (3), prévu en particulier pour être utilisé comme élément de revêtement de sol, de mur et/ou de plafond pour un revêtement de sol, de mur et/ou de plafond, comprenant au moins une plaque de support (2) et au moins une couche de recouvrement (1) selon l'une des revendications précédentes 6 à 8, la face inférieure (26) de la couche de recouvrement (1), opposée à une face utile (7), étant reliée de manière fixe à la face supérieure (27) de la plaque de support (2), tournée vers la face utile (7).

10. Élément de revêtement selon la revendication 9, **caractérisé en ce que** des géométries d'assemblage à rainure et languette (28) correspondantes sont prévues sur des côtés opposés de la plaque de support (2), en particulier pour former un assemblage par encliquetage, avec un côté rainure (29) présentant une rainure (30) et un côté languette (31) opposé au côté rainure (29) et présentant une languette (32), et/ou
**en ce que** des géométries d'assemblage à bouton-pression et/ou à baïonnette correspondantes sont prévues sur des côtés opposés de la plaque de support (2) et/ou
**en ce qu'**un contre-balancement (34), en particulier un contre-balancement (34) présentant du papier kraft et/ou une couche de liège et/ou une polyoléfine expansée (XPO), est disposé en regard de la face inférieure (33) de la plaque de support (2) et/ou
**en ce que** la plaque de support (2) est réalisée sous la forme d'un panneau HDF (panneau de fibres à haute densité), d'une couche de bois véritable et/ou d'un panneau MDF (panneau de fibres de bois à moyenne densité) et/ou **en ce que** la plaque de support (2) présente une matière plastique comme matériau et/ou en est constituée, de préférence du polypropylène et/ou du polyéthylène et/ou **en ce que** la plaque de support (2) est réalisée sans chlorure de polyvinyle et/ou
**en ce que** la plaque de support (2) présente une épaisseur de couche (35) d'au moins 2 mm, de préférence entre 3 et 10 mm, plus préférablement entre 4 et 7 mm.
